(19) **Europäisches Patentamt / European Patent Office / Office européen des brevets**

(11) **EP 3 171 195 B1**

(12) **FASCICULE DE BREVET EUROPEEN**

(45) Date de publication et mention
de la délivrance du brevet:
**10.06.2020 Bulletin 2020/24**

(51) Int Cl.:
**G01S 5/02** *(2010.01)*　　　**G01S 5/06** *(2006.01)*
**G01S 13/87** *(2006.01)*

(21) Numéro de dépôt: **16192091.3**

(22) Date de dépôt: **03.10.2016**

(54) **PROCÉDÉ DE LOCALISATION D'UNE BALISE**

VERFAHREN ZUR LOKALISIERUNG EINER BAKE

METHOD FOR LOCATING A BEACON

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.11.2015 EP 15195140**

(43) Date de publication de la demande:
**24.05.2017 Bulletin 2017/21**

(73) Titulaire: **The Swatch Group Research and
Development Ltd
2074 Marin (CH)**

(72) Inventeur: **Casagrande, Arnaud
2014 Bôle (CH)**

(74) Mandataire: **Goulette, Ludivine et al
ICB
Ingénieurs Conseils en Brevets SA
Faubourg de l'Hôpital 3
2001 Neuchâtel (CH)**

(56) Documents cités:
**US-A1- 2001 030 625　　US-A1- 2012 164 966
US-A1- 2013 214 976　　US-A1- 2015 168 543
US-A1- 2015 185 309　　US-B1- 6 574 478
US-B1- 7 295 159**

EP 3 171 195 B1

**Description**

DOMAINE DE L'INVENTION

L'invention se rapporte au domaine technique des systèmes et procédés de localisation de balises (« beacons » en terminologie anglo-saxonne). On appelle balise tout dispositif utilisé à des fins de localisation, repérable et identifiable par des moyens appropriés.

ARRIERE PLAN DE L'INVENTION

Il existe de nombreux procédé de localisation, dont le plus connu est basé sur le GPS (« Global Positioning System » selon la terminologie anglo-saxonne). Le GPS comprend plusieurs satellites synchronisés, équipés d'horloges atomiques. Ces satellites émettent en permanence des signaux modulés par des codes pseudo-aléatoires datés précisément grâce auxdites horloges atomiques. Un émetteur-récepteur qui capte des signaux provenant d'au moins quatre de ces satellites peut donc calculer les temps de propagation de ces signaux, pour en déduire sa distance aux satellites puis sa position par trilatération. Ce système présente toutefois l'inconvénient de nécessiter l'utilisation d'horloges atomiques, très coûteuses à réaliser du fait de leur grande stabilité. De plus, ce système n'est pas utilisable en intérieur et parfois difficile à mettre en œuvre dans les environnements très construits comprenant des bâtiments de grande hauteur, car vue du ciel est nécessite pour pouvoir capter les informations provenant des divers satellites.
On connait par ailleurs le document US 2001/0030625 A1 décrivant un système de suivi de position d'un objet doté d'une balise radio (« tag »). Le système comporte une pluralité de lecteurs (« readers ») de position connue pour détecter des signaux transmis par la balise et calculer des temps d'arrivée sur la base d'horloges locales desdits lecteurs. Une balise de référence de position connue est utilisée pour calculer régulièrement les dérives de fréquence des horloges locales des lecteurs.
On connait également le document US 2013/0214976 A1 décrivant un procédé de localisation d'un objet doté d'un transmetteur, le procédé impliquant au moins trois récepteurs et un transmetteur de référence de positions connues. Les deux transmetteurs émettent chacun un signal de localisation, reçu par les trois récepteurs. Chaque récepteur calcule alors sa distance aux transmetteurs par calcul de la différence de temps de propagation des signaux de localisation. La position de l'objet est enfin déterminée par triangulation.
On connait enfin le document US 7,295,159 B1 qui décrit un procédé pour mesurer des temps d'arrivée de signaux dans un réseau de communications. Le signal comprend un message numérique de contenu connu, et est précédé d'une séquence pseudo-aléatoire modulée BPSK qui permet au récepteur de se synchroniser sur le signal en utilisant une autocorrélation. Durant la synchronisation, le temps d'arrivée et la différence de fréquence entre l'oscillateur local du récepteur et le message reçu sont calculés. Le contenu du message est alors utilisé pour corriger le temps d'arrivée et la différence de fréquence calculés.

RESUME DE L'INVENTION

L'invention propose donc un procédé de localisation ne nécessitant pas d'utiliser de références de fréquence stables de satellites, ni de balise de référence.
A cet effet, l'invention concerne un procédé de localisation d'une balise au moyen d'un premier, d'un deuxième et d'un troisième émetteur-récepteur de positions connues, la balise, le premier, le deuxième et le troisième émetteur-récepteur comportant chacun un oscillateur local oscillant théoriquement à une même fréquence de référence, mais oscillant en pratique à des fréquences de référence différentes à cause de dérives en fréquence, le procédé comportant les étapes suivantes :

- une émission, par un premier émetteur-récepteur, d'un signal, dit d'initiation, ledit signal d'initiation étant reçu par des deuxième et troisième émetteurs-récepteurs,
- un calcul, au moyen du signal d'initiation, d'erreurs entre la fréquence de référence du premier émetteur-récepteur et les fréquences de référence des deuxième et troisième émetteurs-récepteurs,
- une émission, par la balise, d'un premier signal impulsionnel, ledit premier signal impulsionnel étant reçu par les premier, deuxième et troisième émetteurs-récepteurs,
- une émission, par un premier émetteur-récepteur, d'un deuxième signal impulsionnel, ledit deuxième signal impulsionnel étant reçu par les deuxième et troisième émetteurs-récepteurs,
- un calcul d'au moins trois écarts entre des temps de vol des premier et deuxième signaux impulsionnels au moyen des erreurs de fréquence de référence, chaque écart de temps de vol étant calculé dans la base de temps fournie par l'oscillateur local du premier émetteur-récepteur,
- un calcul d'une position de la balise au moyen des écarts de temps de vol.

Des étapes particulières du procédé de localisation, considérées individuellement ou selon des combinaisons techniquement possibles, sont définies dans les revendications dépendantes 2 à 9.
Avantageusement le procédé permet le calcul de la position de la balise par résolution d'un système d'au moins trois d'équations exprimant les relations entre les écarts de temps de vol des premier et deuxième signaux impulsionnels, et les distances entre la balise et les trois émetteurs-récepteurs. Or les fréquences de référence des émetteurs-récepteurs ayant potentiellement dérivées par rapport à la fréquence de référence théorique, il est nécessaire d'exprimer ces temps de vol dans une même base de temps. Cela est rendu possible par la connaissance des erreurs entre les fréquences de référence des différents émetteurs-récepteurs. Ainsi, les trois émetteurs-récepteurs peuvent être équipés d'oscillateurs à stabilité réduite, par exemple des oscillateurs à quartz non compensés en température, sans que cela ne fausse le calcul de positionnement.

BREVE DESCRIPTION DES DESSINS

Les buts, avantages et caractéristiques du procédé de localisation d'une balise apparaîtront mieux dans la description suivante en regard des dessins sur lesquels :

la figure 1 représente schématiquement un système de localisation permettant la mise en œuvre du procédé selon un mode de réalisation non limitatif de l'invention,

la figure 2 représente schématiquement un émetteur-récepteur du système de localisation de la figure 1,

la figure 3 représente un diagramme en bloc illustrant des étapes du procédé selon un mode de réalisation non limitatif de l'invention,

la figure 4 représente schématiquement le système de localisation de la figure 1, mettant en œuvre une étape du procédé de la figure 3,

la figure 5 représente schématiquement le système de localisation de la figure 1, mettant en œuvre des étapes du procédé de la figure 3,

la figure 6 représente un diagramme temporel représentant des états des émetteurs-récepteurs du système de localisation de la figure 1, au cours du procédé de la figure 3,

la figure 7 représente schématiquement un signal émis par une balise à localiser lors d'une étape du procédé de la figure 3,

la figure 8 représente un diagramme en bloc illustrant des sous-étapes d'une étape du procédé de la figure 3,

la figure 9 représente un diagramme temporel illustrant des émissions et réceptions de signaux transmis au cours du procédé de la figure 3,

la figure 10 représente schématiquement le système de localisation de la figure 1, mettant en œuvre une étape du procédé de la figure 3,

la figure 11 représente schématiquement le système de localisation de la figure 1, mettant en œuvre des étapes du procédé de la figure 3, et

la figure 12 représente schématiquement le système de localisation de la figure 1, mettant en œuvre une étape du procédé de la figure 3.

DESCRIPTION DETAILLEE DE L'INVENTION

Dans la description suivante, tous les éléments du système de localisation d'une balise auto-synchrone, qui sont bien connus de l'homme du métier dans ce domaine technique ne seront relatés que de manière simplifiée.

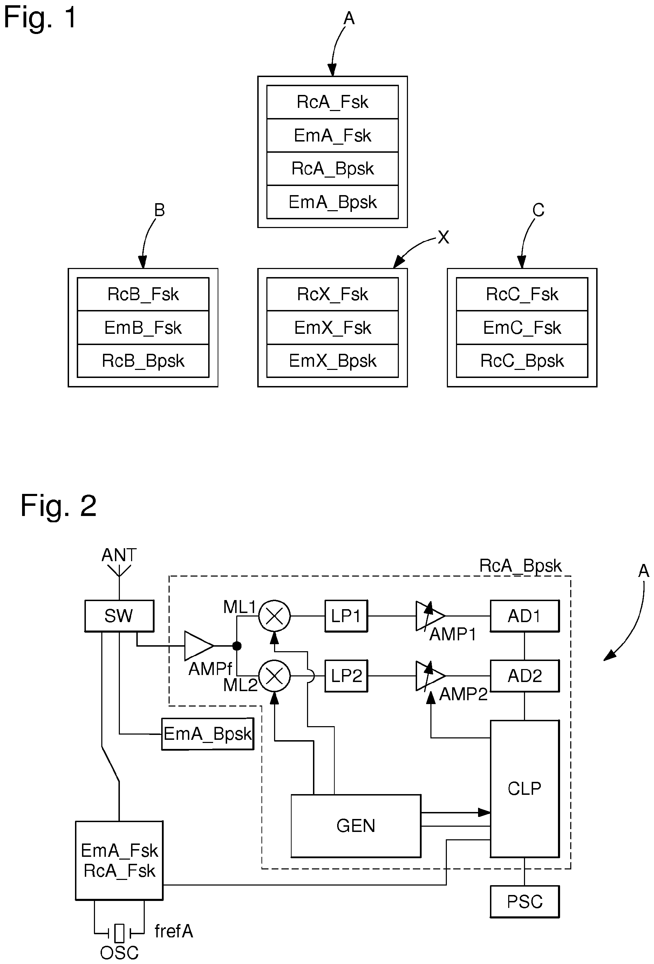

La figure 1 représente schématiquement un système de localisation 2D d'une balise, c'est-à-dire un système de localisation d'une balise se trouvant à la surface de la Terre. La localisation 2D, aussi appelée géolocalisation, permet de positionner une balise sur une carte à l'aide de ses coordonnées géographiques. Le système de localisation 2D comprend une balise X de position inconnue, ainsi qu'un premier émetteur-récepteur A, un deuxième émetteur-récepteur B et un troisième émetteur-récepteur C de positions connues.
Le premier émetteur-récepteur A, le deuxième émetteur-récepteur B, le troisième émetteur-récepteur C et la balise X comportent chacun un oscillateur local oscillant à une fréquence de référence $f_{ref}$, par exemple 26 MHz, servant à fournir une base de temps à leurs composants électroniques. Théoriquement, cette fréquence de référence $f_{ref}$ est commune aux quatre dispositifs A, B, C, X. En pratique, les oscillateurs locaux subissent des dérives de fréquence d'autant plus grandes, que leur qualité est faible. On appelle $f_{refA}$ la fréquence de référence du premier émetteur-récepteur A, $f_{refB}$ la fréquence de référence du deuxième émetteur-récepteur B, $f_{refC}$ la fréquence de référence du troisième émetteur-récepteur C et $f_{refX}$ la fréquence de référence de la balise X. Le système de localisation permet une localisation précise de la balise X malgré ces dérives, comme cela est expliqué ci-après.
Comme cela est représenté à la figure 1, les premier, deuxième, troisième émetteurs-récepteurs A, B, C et la balise X comportent chacun un module de réception de signaux modulés par déplacement de fréquence RcA_Fsk, RcB_Fsk, RcC_Fsk, RcX_Fsk, modulation plus connue sous la dénomination anglo-saxonne « Frequency-Shift Keying », ou FSK. Pour faciliter la lecture, ces modules sont appelés modules de réception FSK, et une porteuse modulée en fréquence par une séquence numérique selon le principe de la modulation FSK est appelée signal FSK. Par exemple, lorsqu'une porteuse de fréquence $f_0$ est modulée par un état « 1 » d'une séquence numérique binaire, le signal résultant est de fréquence $f_0+\Delta f_0$ ; lorsque la porteuse est modulée par un état « 0 » de la séquence binaire, le signal résultant est de fréquence $f_0 - \Delta f_0$. On dit que la fréquence de la porteuse $f_0$ est la fréquence centrale de la modulation FSK. Les modules de réception FSK des émetteurs-récepteurs A, B, C, et de la balise X sont par exemple similaires à l'émetteur-récepteur de signaux à modulation FSK décrit dans le fascicule de brevet européen EP 2 239 860 B1, configurés dans un mode à faible débit.

De plus, les premier, second et troisième émetteurs-récepteurs A, B, C et la balise X comportent chacun un module d'émission de signaux FSK EmA_Fsk, EmB_Fsk, EmC_Fsk, EmX_Fsk, dit module d'émission FSK. L'ensemble des modules d'émission et de réception FSK forme un système de communication. Les modules EmB_Fsk, EmC_Fsk des second et troisième émetteurs-récepteurs B, C permettent de communiquer à l'émetteur-récepteur A, des résultats intermédiaires de corrélations calculés dans les émetteurs-récepteurs B, C. On appelle fréquence de communication $f_0$ la fréquence de la porteuse servant de base aux modulations FSK. La fréquence de communication $f_0$ est par exemple de 2,4 GHz, et la déviation de fréquence codant des états « 0 » ou « 1 » d'une séquence binaire est de 50 kHz.

Par ailleurs, les premier, deuxième et troisième émetteurs-récepteurs A, B, C comportent chacun un module de réception de signaux modulés en phase par un signal binaire RcA_Bpsk, RcB_Bpsk, RcC_Bpsk. Cette modulation est plus connue sous la dénomination anglo-saxonne « Binary Phase-Shift Keying », ou BPSK. Pour faciliter la lecture, ces modules sont appelés modules de réception BPSK, et une porteuse modulée en phase par une séquence binaire selon le principe de la modulation BPSK est appelée signal BPSK. Par exemple, lorsqu'une porteuse de fréquence $f_0$ est modulée par un état « 1 » d'une séquence binaire, le signal résultant est de phase nulle ; lorsque la porteuse est modulée par un état « 0 » de la séquence binaire, le signal résultant est de phase $\pi$.

De plus, le premier émetteur-récepteur A et la balise X comportent chacun un module d'émission de signaux BPSK EmA_Bpsk, EmX_Bpsk, dit module d'émission BPSK. L'ensemble des modules d'émission et de réception BPSK forme un système de communication. La fréquence de la porteuse servant de base aux modulations BPSK est la fréquence de communication $f_0$ précédemment évoquée, et qui vaut par exemple 2,4 GHz.

La figure 2 représente schématiquement un mode de réalisation non limitatif du premier émetteur-récepteur A. Le premier émetteur-récepteur A comporte une antenne ANT d'émission-réception de signaux radio FSK et BPSK, ainsi qu'un interrupteur SW (« switch » en terminologie anglo-saxonne) connecté à l'antenne ANT et permettant de bloquer ou d'autoriser l'émission et la réception des divers signaux.

En outre, comme présenté précédemment, le premier émetteur-récepteur A comporte un module d'émission FSK EmA_Fsk et un module de réception FSK RcA_Fsk, permettant d'émettre et de recevoir des signaux FSK à grande sensibilité dans un mode à faible débit. Le module d'émission FSK EmA_Fsk et le module de réception FSK RcA_Fsk sont par exemple réalisés à base d'un émetteur-récepteur EM9209 de la société EM Microelectronics. Le module d'émission FSK EmA_Fsk et le module de réception FSK RcA_Fsk sont connectés à une première borne de l'interrupteur SW et utilisent comme base de temps la fréquence de référence $f_{refA}$ fournie par un oscillateur à quartz OSC du premier émetteur-récepteur A.

Les second et troisième émetteurs-récepteurs B, C comportent également chacun un module d'émission FSK EmB_Fsk et EmC_FSK et un module de réception FSK RcB_Fsk et RcC_FSK pour l'émission et la réception de signaux FSK à grande sensibilité dans un mode à faible débit. Ces modules d'émission et de réception sont aussi réalisés sur la base d'un émetteur-récepteur EM9209 de la société EM Microelectronics.

Le premier émetteur-récepteur A comporte également un module de réception BPSK RcA_Bpsk. Le module de réception BPSK RcA_Bpsk comporte un amplificateur à faible bruit AMPf (« Low Noise Amplifier » en terminologie anglo-saxonne, ou LNA) connecté à une deuxième borne de l'interrupteur SW et permettant d'amplifier un signal BPSK capté par l'antenne ANT.

Le module de réception BPSK RcA_Bpsk comporte ensuite un étage de démodulation permettant de démoduler le signal BPSK reçu. L'étage de démodulation comporte un premier mélangeur ML1 dont une première entrée est connectée à une sortie de l'amplificateur faible bruit AMPf, et une deuxième entrée est connectée à un générateur GEN de signaux à faible bruit de phase (« Low Phase-Noise Synthesizer » selon la terminologie anglo-saxonne) appartenant au premier émetteur-récepteur A. L'étage de démodulation comporte également un deuxième mélangeur ML2 dont une première entrée est connectée à la sortie de l'amplificateur faible bruit AMPf, et une deuxième entrée est connectée au générateur GEN de signaux. Le générateur GEN de signaux fournit au premier mélangeur ML1 un signal de démodulation LOi à la fréquence de communication $f_0$, et au deuxième mélangeur ML1 un signal en quadrature $LO_q$ avec le signal de démodulation LOi. En sortie du premier et du deuxième mélangeur ML1, ML2 se trouve alors un signal somme d'un signal utile et d'un signal modulé à la fréquence $2 \cdot f_0$.

L'étage de démodulation comporte ensuite un premier filtre passe-bas LP1 (« Low-Pass Filter » selon la terminologie anglo-saxonne) et un deuxième filtre passe-bas LP2, connectés respectivement aux sorties du premier mélangeur ML1 et du deuxième mélangeur ML2. Les filtres passe-bas LP1, LP2 permettent de filtrer les composantes spectrales à $2 \cdot f_0$ des signaux en sortie des mélangeurs ML1, ML2.

Le module de réception BPSK RcA_Bpsk comporte ensuite un étage d'échantillonnage permettant d'échantillonner le signal BPSK reçu et démodulé. L'étage d'échantillonnage comporte un premier amplificateur à gain variable AMP1 et un deuxième amplificateur à gain variable AMP2, connectés respectivement aux sorties du premier filtre passe-bas LP1 et du deuxième filtre passe-bas LP2. L'étage d'échantillonnage comporte ensuite un premier convertisseur analogique-numérique AD1 (« Analog to Digital Converter » selon la terminologie anglo-saxonne, ou ADC) et un deuxième convertisseur analogique-numérique AD2, connectés respectivement au premier amplificateur à gain variable AMP1 et au deuxième amplificateur à gain variable AMP2. On note que le gain des amplificateurs à gain variable AMP1, AMP2 est régulé par un circuit logique programmable CLP de type FPGA (« Field-Programmable Gate Array » en terminologie anglo-saxonne) appartenant au premier émetteur-récepteur A. Les amplificateurs à gain variable AMP1, AMP2 permettent d'atténuer le signal en entrée des convertisseurs analogique-numérique AD1, AD2 afin de pouvoir diminuer la résolution des convertisseurs analogique-numérique AD1, AD2 sans affecter leur performance dynamique.

Par ailleurs, le premier émetteur-récepteur A comporte un module d'émission BPSK EmA_Bpsk, comprenant un modulateur BPSK.

Enfin, le premier émetteur-récepteur A comporte un processeur de signal numérique PSC (« Digital Signal Processor » selon la terminologie anglo-saxonne) permettant par exemple de réaliser des calculs d'erreur de fréquence de référence, des calculs d'autocorrélation, ou encore des calculs de positionnement de la balise X.

Dans un mode de réalisation non limitatif, le deuxième émetteur-récepteur B et le troisième émetteur-récepteur C sont identiques au premier émetteur-récepteur A. Alternativement, ils comprennent tous les composants du premier émetteur-récepteur A à l'exception du module d'émission BPSK.

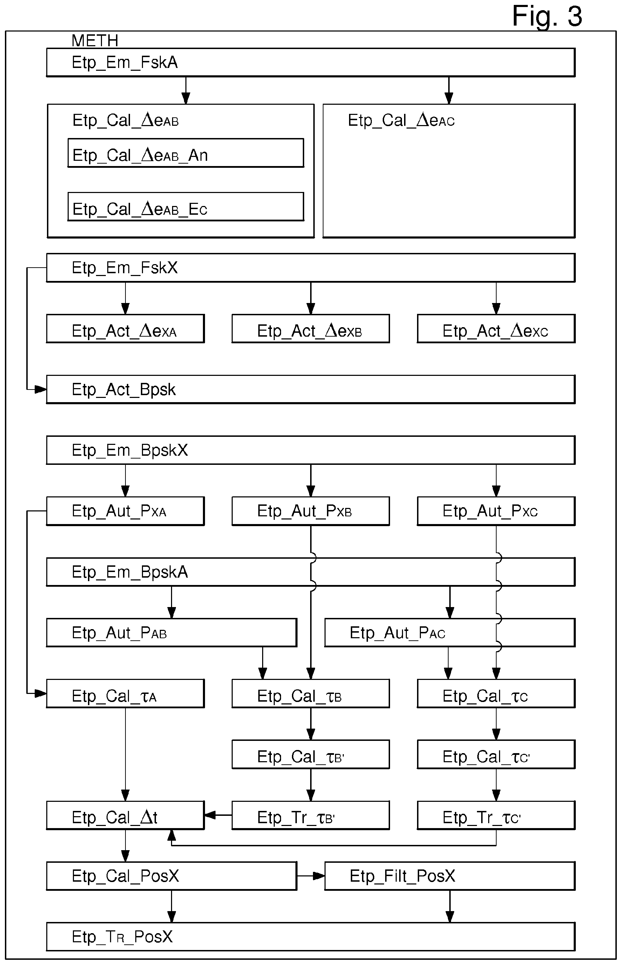

La figure 3 représente schématiquement des étapes d'un mode de réalisation non limitatif d'un procédé METH de localisation 2D de la balise X, adapté à être mis en action par le système de localisation présenté précédemment.

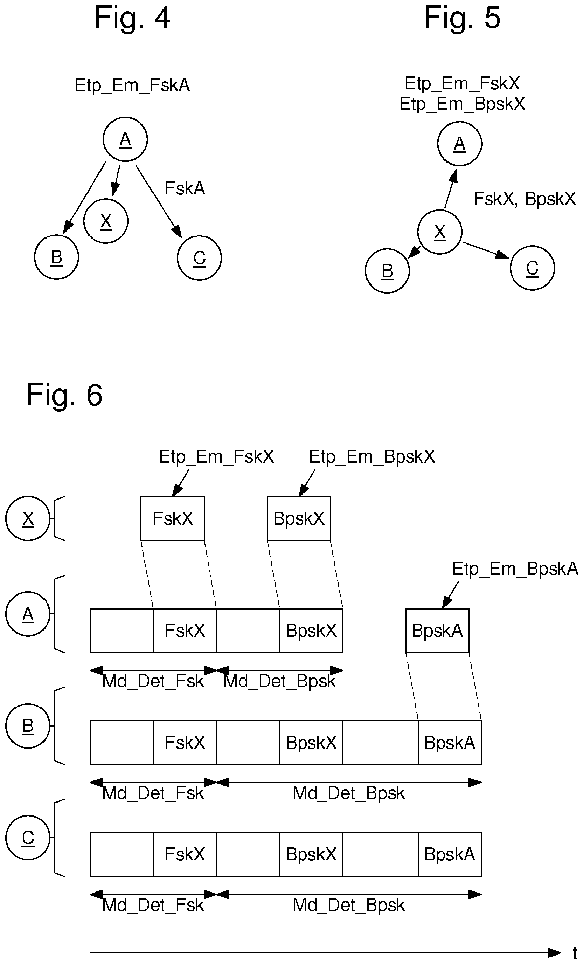

Selon une étape Etp_Em_FskA représentée à la figure 4, le module d'émission FSK EmA_Fsk du premier émetteur-récepteur A émet un premier signal FSK FskA longue portée et bas débit (le débit est inférieur à 10 Kbits par seconde, par exemple). On appelle ce signal «signal d'initiation ». On note que n'importe quelle autre modulation pourrait être utilisée. Le signal d'initiation FskA comporte une requête de localisation de la balise X, suivie d'une adresse d'identification (hexadécimale, par exemple) du premier émetteur-récepteur A. Par « signal FSK comportant une requête/une adresse », on entend une porteuse modulée selon une modulation FSK par une requête/une adresse codée numériquement. Le signal d'initiation FskA est non seulement reçu par la balise X, mais également par le deuxième émetteur-récepteur B et le troisième émetteur-récepteur C. En effet, les modules de réception FSK RcX_Fsk, RcA_Fsk, RcB_Fsk, RcC_Fsk de la balise X et des trois émetteurs-récepteurs A, B et C sont initialement dans un mode de détection. Dans ce mode, les modules de réception FSK RcX_Fsk, RcA_Fsk, RcB_Fsk, RcC_Fsk captent en continu les signaux FSK leur parvenant, notamment des signaux provenant de dispositifs environnants perturbateurs, et tentent d'identifier des signaux FSK particuliers tel que le signal d'initiation FskA. On note que ce scénario n'est pas restrictif. Si l'on souhaite que la balise X utilise peu d'énergie, il est possible de la faire fonctionner dans un mode différent. Dans ce mode, le signal d'initiation FskA est envoyé depuis la balise X à un certain moment, et ce signal est directement suivi d'un signal impulsionnel BPSK (ou tout autre type de modulation). La balise X peut ainsi être en mode de veille permanente et ne se réveiller que ponctuellement (sur la base d'un minuteur interne ou d'un événement quelconque, par exemple) pour se placer en mode de transmission seule (évitant ainsi avantageusement la consommation du mode de réception).

Selon une étape Etp_Cal_$\Delta e_{AB}$, le deuxième émetteur-récepteur B calcule une plage d'erreur $\Delta e_{AB}$ entre sa fréquence de référence frefB et celle du premier émetteur-récepteur A $f_{refA}$, à l'aide du signal d'initiation FskA reçu. Pour ce faire, l'étape Etp_Cal_$\Delta e_{AB}$ comporte les sous-étapes suivantes :

- Selon une sous-étape Etp_Cal_$\Delta e_{AB}$_An, le deuxième émetteur-récepteur B analyse l'évolution dynamique du spectre fréquentiel des signaux reçus en continu par son module de réception FSK RcB_Fsk, ledit spectre fréquentiel étant centré sur la fréquence de communication $f_0$ évoquée précédemment. Le spectre fréquentiel est avantageusement obtenu par transformée de Fourier discrète des signaux reçus. Lorsqu'une raie subissant un saut de fréquence caractéristique (de l'ordre de quelques kilohertz, par exemple) est repérée, cette raie est attribuée au signal d'initiation FskA.

- Selon une sous-étape Etp_Cal_$\Delta e_{AB}$_Ec, le deuxième émetteur-récepteur B calcule l'écart entre cette raie caractéristique et la fréquence centrale du spectre fréquentiel. En effet, si la fréquence de référence du premier émetteur-récepteur A et la fréquence de référence du deuxième émetteur-récepteur B étaient parfaitement synchronisées, la raie caractéristique se trouverait au centre du spectre fréquentiel. Toutefois, à cause des limites de résolution du spectre fréquentiel, l'écart n'est pas calculable précisément : seule une plage d'écart est calculable. Cette plage d'écart est la plage d'erreur $\Delta e_{AB}$ entre la fréquence de référence $f_{refB}$ du deuxième émetteur-récepteur B et celle $f_{refA}$ du premier émetteur-récepteur A.

Selon une étape Etp_Cal_$\Delta e_{AC}$, le troisième émetteur-récepteur C calcule une plage d'erreur $\Delta e_{AC}$ entre sa fréquence de référence $f_{refC}$ et celle du premier émetteur-récepteur A $f_{refA}$, à l'aide du signal d'initiation FskA reçu. Cette étape est réalisée de manière similaire à l'étape Etp_Cal_$\Delta e_{AB}$.

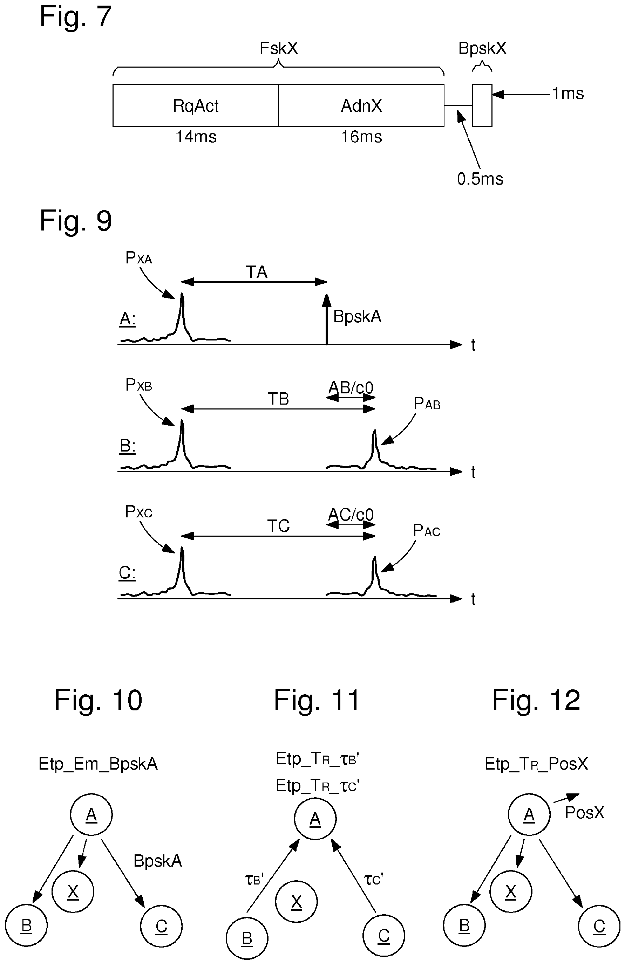

Selon une étape Etp_Em_FskX représentée à la figure 5 ainsi qu'à la figure 6, le module d'émission FSK EmX_Fsk de la balise X émet un deuxième signal FSK FskX longue portée et bas débit (le débit est inférieur à 10 Kbits par seconde, par exemple). On appelle ce signal «signal d'activation». Le signal d'activation FskX comprend une requête d'activation RqAct des moyens de réception BPSK RcA_Bpsk, RcB_Bpsk, RcC_Bpsk des émetteurs-récepteurs A, B, C, suivie d'une adresse d'identification AdrX (hexadécimale, par exemple) de la balise X. Un exemple de signal d'activation FskX est représenté schématiquement à la figure 7. Dans l'exemple représenté, l'émission du signal d'activation FskX dure 30 millisecondes. Les 14 premières millisecondes du signal d'activation FskX comportent la requête d'activation RqAct, tandis que ses 16 dernières millisecondes comportent l'adresse d'identification AdrX. Le signal d'activation FskX est reçu par chacun des trois émetteurs-récepteurs A, B et C, leurs moyens de réception FSK RcA_Fsk, RcB_Fsk, RcC_Fsk étant toujours en mode de détection Md_Det_Fsk, comme illustré à la figure 6.

Selon une étape Etp_Cal_$\Delta e_{XA}$, le premier émetteur-récepteur A calcule une plage d'erreur $\Delta e_{XA}$ entre sa fréquence de référence $f_{refA}$ et celle $f_{refX}$ de la balise X, à l'aide du signal d'activation FskX reçu. Cette étape est réalisée de manière similaire à l'étape Etp_Cal_$\Delta e_{AB}$.

Selon une étape Etp_Cal_$\Delta e_{XB}$, le deuxième émetteur-récepteur B calcule une plage d'erreur $\Delta e_{XB}$ entre sa fréquence de référence $f_{refB}$ et celle $f_{refX}$ de la balise X, à l'aide du signal d'activation FskX reçu. Cette étape est réalisée de manière similaire à l'étape Etp_Cal_$\Delta e_{AB}$.

Selon une étape Etp_Cal_$\Delta e_{XC}$, le troisième émetteur-récepteur C calcule une plage d'erreur $\Delta e_{XC}$ entre sa fréquence de référence $f_{refC}$ et celle $f_{refX}$ de la balise X, à l'aide du signal d'activation FskX reçu. Cette étape est réalisée de manière similaire à l'étape Etp_Cal_$\Delta e_{AB}$.

Selon une étape Etp_Act_Bpsk, en réponse à la réception de la requête d'activation RqAct, les émetteurs-récepteurs A, B, C activent leurs modules de réception BPSK RcA_Bpsk, RcB_Bpsk, RcC_Bpsk, qui se trouvent alors dans un mode de détection Md_Det_Bpsk, comme cela est représenté à la figure 6. Dans ce mode, les modules de réception BPSK RcA_Bpsk, RcB_Bpsk, RcC_Bpsk captent en continu les signaux BPSK leur parvenant, notamment des signaux provenant de dispositifs environnants perturbateurs, et tentent d'identifier des signaux BPSK particuliers.

Selon une étape Etp_Em_BpskX représentée à la figure 5 ainsi qu'à la figure 6, le module d'émission BPSK EmX_Bpsk de la balise X émet un premier signal BPSK impulsionnel BpskX à haut débit (par exemple 1 mégabit par seconde) et à bande étroite (par exemple de la largeur d'un canal Bluetooth). Le premier signal impulsionnel BpskX se présente sous la forme d'une porteuse à la fréquence de communication $f_0$ (dans la base de temps fournie par l'oscillateur local de la balise X) modulée en phase par une séquence de signaux pseudo-aléatoires. Une séquence pseudo-aléatoire est une séquence binaire périodique dont les valeurs au sein d'une période sont aléatoires. Un exemple de premier signal impulsionnel BpskX est représenté schématiquement à la figure 7. On note que tout autre type de modulation peut être envisagé (QPSK, FSK, GFSK ou OOK par exemple). Dans l'exemple représenté, le premier signal impulsionnel BpskX est émis 0,5 millisecondes après le signal d'activation FskX, et dure 1 milliseconde. Le premier signal impulsionnel BpskX est donc très court par rapport au signal d'activation FskX. Le premier signal impulsionnel BpskX est reçu par les trois émetteurs-récepteurs A, B, C, dont les modules de réception BPSK RcA_Bpsk, RcB_Bpsk, RcC_Bpsk sont en mode de détection Md_Det_Bpsk, comme cela est représenté à la figure 6.

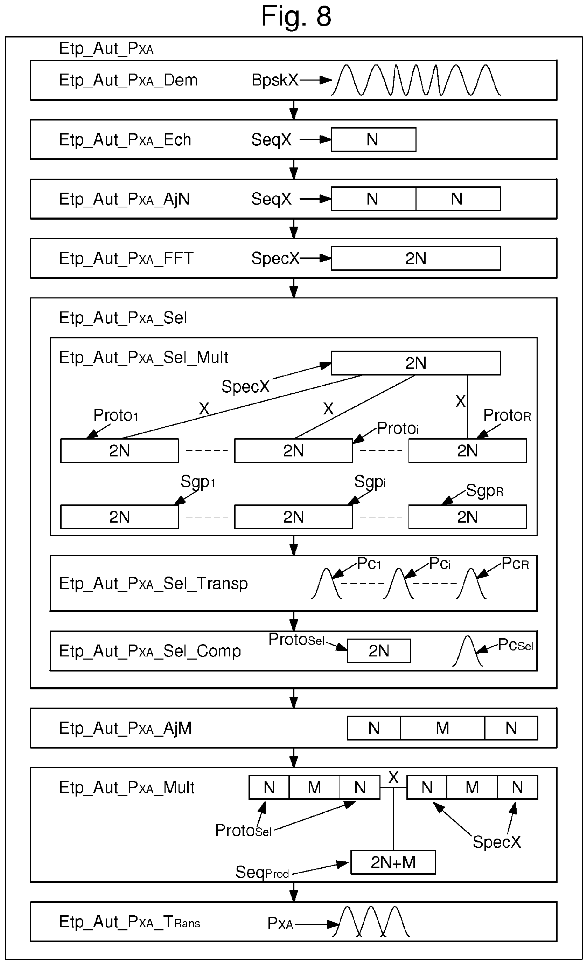

Selon une étape Etp_Aut_$P_{XA}$ représentée à la figure 8, le premier émetteur-récepteur A réalise une autocorrélation du premier signal impulsionnel BpskX reçu par son module de réception BPSK RcA_Bpsk, sur laquelle un premier pic d'autocorrélation $P_{XA}$ est détecté. Le premier pic d'autocorrélation $P_{XA}$ est notamment représenté à la figure 9. L'étape Etp_Aut_$P_{XA}$ comporte les sous-étapes suivantes :

- Selon une sous-étape Etp_Aut_$P_{XA}$_Dem, le premier signal impulsionnel BpskX reçu est démodulé.
- Selon une sous-étape Etp_Aut_$P_{XA}$_Ech, le premier signal impulsionnel démodulé est échantillonné à une fréquence d'échantillonnage, de sorte à former une séquence impulsionnelle SeqX comprenant N échantillons, N étant un nombre entier positif. Ladite séquence impulsionnelle SeqX comporte par exemple 19 500 échantillons.
- Selon une sous-étape Etp_Aut_$P_{XA}$_AjN, N échantillons de valeur nulle sont ajoutés à la fin de la séquence impulsionnelle SeqX, de sorte à former une séquence allongée de 2N échantillons. Par exemple, si N vaut 19 500, la séquence allongée comporte 39 000 échantillons. Cette sous-étape, connue sous la dénomination anglo-saxonne « zero-padding », permet d'augmenter la précision d'un spectre fréquentiel du premier signal impulsionnel BpskX afin de mieux y localiser des maximas.
- Selon une sous-étape Etp_Aut_$P_{XA}$_FFT, un spectre fréquentiel SpecX de la séquence allongée est calculé, par exemple par transformée de Fourier discrète au moyen d'un algorithme de transformation de Fourier rapide (« Fast Fourier Transform » en terminologie anglo-saxonne, FFT). On note que le spectre fréquentiel SpecX est de longueur 2N.
- Selon une sous-étape Etp_Aut_$P_{XA}$_Sel, un prototype $Proto_{Sel}$ est sélectionné parmi R prototypes $(Proto_i)_{i=1...R}$, R étant un nombre entier supérieur à 2. On appelle prototype Protoi un spectre fréquentiel d'un signal BPSK échantillonné à la fréquence d'échantillonnage et auquel N échantillons de valeur nulle ont été ajoutés. Ledit signal BPSK se présente sous la forme d'une porteuse de fréquence $f_0+\delta f_i$ modulée par la séquence de signaux pseudo-aléatoires précédemment évoquée. Dans un mode de réalisation, les prototypes $(Proto_i)_{i=1...R}$ sont préalablement enregistrés dans une mémoire du premier émetteur-récepteur A. Les fréquences $f_0+\delta f_i$ sont alors prédéterminées. Alternativement, les prototypes $(Proto_i)_{i=1...R}$ sont générés à réception du premier signal impulsionnel BpskX, en fonction de la plage d'erreur $\Delta e_{XA}$ entre la fréquence de référence du premier émetteur-récepteur A $f_{refA}$ et celle $f_{refX}$ de la balise X, ladite plage d'erreur $\Delta e_{XA}$ ayant été calculée lors de l'étape Etp_Cal_$\Delta e_{XA}$. Dans ce cas, les écarts de fréquence $(\delta f_i)_{i=1...R}$ sont choisis de sorte à être compris dans la plage d'erreur $\Delta e_{XA}$, et de sorte que ladite plage d'erreur $\Delta e_{XA}$ soit couverte intégralement par les différents écarts de fréquence $(\delta f_i)_{i=1...R}$. Par exemple, pour tout i compris entre 1 et R, $\delta f_i = i/R \cdot \Delta e_{XA}$.

Dans les deux cas, la sous-étape Etp_Aut_$P_{XA}$_Sel de sélection d'un prototype comporte les sous-étapes suivantes :

- Selon une sous-étape Etp_Aut_$P_{XA}$_Sel_Mult, le spectre fréquentiel SpecX est multiplié à chacun des R prototypes $(Proto_i)_{i=1...R}$, ce qui génère R signaux produits $(Sgp_i)_{i=1...R}$.
- Selon une sous-étape Etp_Aut_$P_{XA}$_Sel_Trans, chaque signal produit $(Sgp_i)_{i=1...R}$ est transposé dans le domaine temporel. Chaque signal produit $(Sgp_i)_{i=1...R}$ présente un pic, qui est en réalité un pic d'autocorrélation $(Pc_i)_{i=1...R}$. En effet, une multiplication dans le domaine fréquentiel équivaut à une corrélation dans le domaine temporel. De plus, on note que moins de calculs doivent être réalisés pour effectuer une multiplication dans le domaine fréquentiel que pour effectuer une corrélation dans le domaine temporel : la complexité de l'algorithme de corrélation dans le domaine temporel est $O(n^2)$, tandis qu'elle est $O(n \cdot log(n))$ dans le domaine fréquentiel.
- Selon une sous-étape Etp_Aut_$P_{XA}$_Sel_Comp, les amplitudes des pics d'autocorrélation $(PC_i)_{i=1...R}$ sont comparées. Le prototype $Proto_{Sel}$ dont le signal produit $Sgp_{Sel}$ présente le pic d'autocorrélation $Pc_{Sel}$ le plus haut est sélectionné. Le prototype sélectionné $Proto_{Sel}$ est donc celui qui maximise le rapport pic d'autocorrélation sur bruit pour un repérage du pic d'autocorrélation le plus fiable possible. On note que l'écart de fréquence $\delta f_{Sel}$ du prototype sélectionné $Proto_{Sel}$ est une estimation de l'erreur $e_{XA}$ entre la fréquence de référence de la balise X $f_{refX}$ et celle du premier émetteur-récepteur A $f_{refA}$. Cette estimation est d'autant plus précise que R est élevé.

- Selon une sous-étape Etp_Aut_$P_{XA}$_AjM, M échantillons de valeur nulle sont ajoutés au centre du spectre fréquentiel SpecX, selon le principe du « zero-padding », de sorte à créer un spectre fréquentiel allongé comportant N+M+N échantillons, M étant un nombre entier positif. Cette sous-étape permet d'augmenter artificiellement la fréquence d'échantillonnage du premier signal impulsionnel BpskX, pour réaliser une interpolation de ce signal dans le domaine temporel. Si N vaut 19 000, M=1 048 576-39 000 points sont par exemple ajoutés. L'interpolation permet de déterminer finement la forme des maximas du signal temporel correspondant au spectre fréquentiel.
- Selon une sous-étape Etp_Aut_$P_{XA}$_Mult, le spectre fréquentiel allongé est multiplié au prototype sélectionné allongé, ce qui génère une séquence produit $Seq_{Prod}$. Le prototype sélectionné allongé est le prototype sélectionné $Proto_{Sel}$ au centre duquel M échantillons de valeur nulle ont été ajoutés.
- Selon une sous-étape Etp_Aut_$P_{XA}$_Trans, la séquence produit est transposée dans le domaine temporel, par exemple par un algorithme de transformation de Fourier rapide inverse (« Inverse Fast Fourier Transform » en terminologie anglo-saxonne, ou IFFT). La séquence produit présente un pic d'autocorrélation, le premier pic d'autocorrélation $P_{XA}$. Le premier pic d'autocorrélation $P_{XA}$ est de résolution élevée grâce à la sous-étape Etp_Aut_$P_{XA}$_AjM, et d'amplitude élevée grâce à la sous-étape Etp_Aut_$P_{XA}$_Sel. On note que la séquence produit transposée peut éventuellement présenter plusieurs pics d'autocorrélation à cause du phénomène multi-trajet des signaux radio, notamment à cause de réfractions ou réflexions du premier signal BpskX sur divers obstacles se trouvant entre la balise X et le premier émetteur-récepteur A. Le premier pic d'autocorrélation $P_{XA}$ est alors le premier des pics détectés temporellement.

Selon une étape Etp_Aut_$P_{XB}$, le deuxième émetteur-récepteur B réalise une autocorrélation du premier signal impulsionnel BpskX reçu, sur laquelle un deuxième pic d'autocorrélation $P_{XB}$ est détecté. Le deuxième pic d'autocorrélation $P_{XB}$ est représenté à la figure 9. Cette étape est réalisée de manière similaire à l'étape Etp_Aut_$P_{XA}$. Naturellement, la plage d'erreur $\Delta e_{XA}$ entre la fréquence de référence du premier émetteur-récepteur A $f_{refA}$ et celle $f_{refX}$ de la balise X est remplacée par la plage d'erreur $\Delta e_{XB}$ entre la fréquence de référence du deuxième émetteur-récepteur B $f_{refB}$ et celle $f_{refX}$ de la balise X.

Selon une étape Etp_Aut_$P_{XC}$, le troisième émetteur-récepteur C réalise une autocorrélation du premier signal impulsionnel BpskX reçu, sur laquelle un troisième pic d'autocorrélation Pxc est détecté. Le troisième pic d'autocorrélation Pxc est représenté à la figure 9. Cette étape est réalisée de manière similaire à l'étape Etp_Aut_P$_{XA}$. Naturellement, la plage d'erreur $\Delta e_{XA}$ entre la fréquence de référence du premier émetteur-récepteur A f$_{refA}$ et celle f$_{refX}$ de la balise X est remplacée par la plage d'erreur $\Delta e_{XC}$ entre la fréquence de référence du troisième émetteur-récepteur C f$_{refC}$ et celle f$_{refX}$ de la balise X.

Selon une étape Etp_Em_BpskA représentée à la figure 10, le premier émetteur-récepteur A émet un deuxième signal BPSK impulsionnel BpskA à haut débit et à bande étroite. Le deuxième signal impulsionnel BpskA se présente sous la forme d'une porteuse à la fréquence de communication f$_0$ (dans la base de temps fournie par l'oscillateur local du premier émetteur-récepteur A) modulée en phase par la séquence de signaux pseudo-aléatoires précédemment évoquée. Le deuxième signal impulsionnel BpskA est reçu par le deuxième émetteur-récepteur B et le troisième émetteur-récepteur C, dont les moyens de réception BPSK RcB_Bpsk, RcC_Bpsk sont toujours en mode de détection Md_Det_Bpsk, comme illustré à la figure 6.

Selon une étape Etp_Aut_P$_{AB}$, le deuxième émetteur-récepteur B réalise une autocorrélation du deuxième signal impulsionnel BpskA reçu, sur laquelle un quatrième pic d'autocorrélation P$_{AB}$ est détecté. Le quatrième pic d'autocorrélation P$_{AB}$ est représenté à la figure 9. Cette étape est réalisée de manière similaire à l'étape Etp_Aut_P$_{XA}$. Naturellement, la plage d'erreur $\Delta e_{XA}$ entre la fréquence de référence du premier émetteur-récepteur A f$_{refA}$ et celle f$_{refX}$ de la balise X est remplacée par la plage d'erreur $\Delta e_{AB}$ entre la fréquence de référence du premier émetteur-récepteur A f$_{refA}$ et celle f$_{refB}$ du deuxième émetteur-récepteur B. On note qu'au sein de cette étape, et plus particulièrement au sein de la sous-étape Etp_Aut_P$_{AB}$_Sel_Comp, l'erreur e$_{AB}$ entre la fréquence de référence du premier émetteur-récepteur A f$_{refA}$ et celle f$_{refB}$ du deuxième émetteur-récepteur B est estimée.

Selon une étape Etp_Aut_P$_{AC}$, le troisième émetteur-récepteur C réalise une autocorrélation du deuxième signal BPSK BpskA reçu, sur laquelle un cinquième pic d'autocorrélation P$_{AC}$ est détecté. Le cinquième pic d'autocorrélation PAC est représenté à la figure 9. Cette étape est réalisée de manière similaire à l'étape Etp_Aut_P$_{XA}$. Naturellement, la plage d'erreur $\Delta e_{XA}$ entre la fréquence de référence du premier émetteur-récepteur A f$_{refA}$ et celle f$_{refX}$ de la balise X est remplacée par la plage d'erreur $\Delta e_{AB}$ entre la fréquence de référence du premier émetteur-récepteur A f$_{refA}$ et celle f$_{refC}$ du troisième émetteur-récepteur C. On note qu'au sein de cette étape, et plus particulièrement au sein de la sous-étape Etp_Aut_P$_{AC}$_Sel_Comp, l'erreur e$_{AC}$ entre la fréquence de référence f$_{refA}$ du premier émetteur-récepteur A et celle f$_{refC}$ du troisième émetteur-récepteur C est estimée.

Selon une étape Etp_Cal_$\tau_A$, le premier émetteur-récepteur A calcule un écart temporel $\tau_A$ entre le temps associé au premier pic d'autocorrélation P$_{XA}$ (qui correspond au temps de réception par le premier émetteur-récepteur A du premier signal impulsionnel BpskX envoyé par la balise X), et le temps d'envoi du deuxième signal impulsionnel BpskA par le premier émetteur-récepteur A. L'écart temporel $\tau_A$ est représenté à la figure 9.

Selon une étape Etp_Cal_$\tau_B$, le deuxième émetteur-récepteur B calcule un écart temporel $\tau_B$ entre le temps associé au deuxième pic d'autocorrélation P$_{XB}$ (qui correspond au temps de réception par le deuxième émetteur-récepteur B du premier signal impulsionnel BpskX envoyé par la balise X), et le temps associé au quatrième pic d'autocorrélation P$_{AB}$ (qui correspond au temps de réception par le deuxième émetteur-récepteur B du deuxième signal impulsionnel BpskA envoyé par le premier émetteur-récepteur A). Naturellement, cet écart temporel $\tau_B$ est exprimé dans la base de temps fournie par l'oscillateur local du deuxième émetteur-récepteur B. L'écart temporel $\tau_B$ est représenté à la figure 9.

Selon une étape Etp_Cal_$\tau_{B'}$, le deuxième émetteur-récepteur B calcule un écart temporel $\tau_B$' correspondant à la transposition de l'écart temporel $\tau_B$ dans la base de temps fournie par l'oscillateur local du premier émetteur-récepteur A. L'écart temporel $\tau_B$' est égal à l'écart temporel $\tau_B$ multiplié par l'erreur e$_{AB}$ entre la fréquence de référence du premier émetteur-récepteur A f$_{refA}$ et celle du deuxième émetteur-récepteur B f$_{refB}$ :

$$\tau_B' = \tau_B \cdot e_{AB}$$

Selon une étape Etp_Tr_$\tau_{B'}$ représentée à la figure 11, le deuxième émetteur-récepteur B transmet au premier émetteur-récepteur A l'écart temporel $\tau_B$'. Alternativement, le deuxième émetteur-récepteur B transmet au premier émetteur-récepteur A l'écart temporel $\tau_B$, ainsi que l'erreur e$_{AB}$ entre la fréquence de référence f$_{refA}$ du premier émetteur-récepteur A et celle f$_{refB}$ du deuxième émetteur-récepteur B. Dans ce cas, le premier émetteur-récepteur A réalise lui-même le calcul de l'écart temporel $\tau_B$'.

Selon une étape Etp_Cal_$\tau_C$, le troisième émetteur-récepteur C calcule un écart temporel $\tau_C$ entre le temps associé au troisième pic d'autocorrélation Pxc (qui correspond au temps de réception par le troisième émetteur-récepteur C du premier signal impulsionnel BpskX envoyé par la balise X), et le temps associé au cinquième pic d'autocorrélation P$_{AC}$ (qui correspond au temps de réception par le troisième émetteur-récepteur C du deuxième signal impulsionnel BpskA envoyé par le premier émetteur-récepteur A). Naturellement, cet écart temporel $\tau_C$ est exprimé dans la base de temps fournie par l'oscillateur local du troisième émetteur-récepteur C. L'écart temporel $\tau_C$ est représenté à la figure 9.

Selon une étape Etp_Cal_$\tau_{C'}$, le troisième émetteur-récepteur C calcule un écart temporel $\tau_C$' correspondant à la transposition de l'écart temporel $\tau_C$ dans la base de temps fournie par l'oscillateur local du premier émetteur-récepteur A. L'écart temporel $\tau_C$' est égal à l'écart temporel $\tau_C$ multiplié par l'erreur eAc entre la fréquence de référence $f_{refA}$ du premier émetteur-récepteur A et celle $f_{refC}$ du troisième émetteur-récepteur C :

$$\tau_C{}' = \tau_C \cdot e_{AC}$$

Selon une étape Etp_Tr_$\tau_C{}'$ représentée à la figure 11, le troisième émetteur-récepteur C transmet au premier émetteur-récepteur A l'écart temporel $\tau_C{}'$. Alternativement, le troisième émetteur-récepteur C transmet au premier émetteur-récepteur A l'écart temporel $\tau_C$, ainsi que l'erreur eAc entre la fréquence de référence $f_{refA}$ du premier émetteur-récepteur A et celle $f_{refC}$ du troisième émetteur-récepteur C. Dans ce cas, le premier émetteur-récepteur A réalise lui-même le calcul de l'écart temporel $\tau_C{}'$.

Selon une étape Etp_Cal_$\Delta t$, le premier émetteur-récepteur A calcule des écarts de temps de vol $\Delta t_1$, $\Delta t_2$ et $\Delta t_3$ définis par les relations suivantes :

$$XA - AB = \Delta t_1 \cdot c_0$$

$$XA - XC = \Delta t_2 \cdot c_0$$

$$XB - XC = \Delta t_3 \cdot c_0$$

où XA est la distance (inconnue) séparant la balise X et le premier émetteur-récepteur A, XB est la distance (inconnue) séparant la balise X et le deuxième émetteur-récepteur B, XC est la distance (inconnue) séparant la balise X et le troisième émetteur-récepteur C, AB est la distance (connue par le premier émetteur-récepteur A) séparant la balise X et le deuxième émetteur-récepteur B, $c_0$ est la vitesse de propagation des signaux échangés entre les divers dispositifs A, B, C, X.

L'écart de temps de vol $\Delta t_1$ correspond donc à la différence du temps entre l'émission du premier signal impulsionnel BpskX par la balise X et sa réception par le premier émetteur-récepteur A, et du temps entre l'émission du deuxième signal impulsionnel BpskA par le premier émetteur-récepteur A et sa réception par le deuxième émetteur-récepteur B. Par ailleurs, l'écart de temps de vol $\Delta t_2$ correspond à la différence du temps entre l'émission du premier signal impulsionnel BpskX par la balise X et sa réception par le premier émetteur-récepteur A, et du temps entre l'émission du premier signal impulsionnel BpskX par la balise X et sa réception par le troisième émetteur-récepteur C. Enfin, l'écart de temps de vol $\Delta t_3$ correspond à la différence du temps entre l'émission du premier signal impulsionnel BpskX par la balise X et sa réception par le deuxième émetteur-récepteur B, et du temps entre l'émission du premier signal impulsionnel BpskX par la balise X et sa réception par le troisième émetteur-récepteur C.

Les écarts de temps de vol $\Delta t_1$, $\Delta t_2$ et $\Delta t_3$ sont calculés par le premier émetteur-récepteur A selon les formules suivantes :

$$\Delta t_1 = \tau_A - (\tau_B{}' - AB/c_0)$$

$$\Delta t_2 = \tau_A - (\tau_C{}' - AC/c_0)$$

$$\Delta t_3 = \tau_B{}' - AB/c_0 - (\tau_C{}' - AC/c_0)$$

Selon une étape Etp_Cal_PosX, le premier émetteur-récepteur A résout le système de 3 équations à 3 inconnues (XA, XB, XC) suivant :

$$XA = \Delta t_1 \cdot c_0 + AB$$

$$XC = XA - \Delta t_2 \cdot c_0$$

$$XB = \Delta t_3 \cdot c_0 + XC$$

et on déduit une position PosX de la balise X.

Toutes les étapes précédentes sont éventuellement réalisées à nouveau, afin que le premier émetteur-récepteur A dispose d'au moins deux positions de la balise X. Le procédé METH comporte alors une étape supplémentaire Etp_Filt_PosX de calcul d'une position finale à partir des au moins deux positions, par exemple par une moyenne effectuée.

Selon une étape Etp_Tr_PosX représentée à la figure 12, A transmet la position PosX de X au deuxième émetteur-récepteur B, au troisième émetteur-récepteur C, à la balise X et à une unité de centralisation. Alternativement, le premier émetteur-récepteur A ne transmet la position Pos_X de X qu'à l'un, deux ou trois de ces dispositifs.

Naturellement, l'ordre des étapes présenté ci-dessus n'est pas limitatif, les étapes pouvant être réalisées dans tout autre ordre techniquement possible.

A partir de la description qui vient d'être faite, plusieurs variantes du procédé et système de localisation d'une balise peuvent être conçues par l'homme du métier sans sortir du cadre de l'invention définie par les revendications. Par exemple, il a été présenté un système de localisation 2D comportant trois émetteurs-récepteurs A, B, C. Or en intégrant un émetteur-récepteur supplémentaire au système de localisation, une localisation 3D d'une balise peut être réalisée, c'est-à-dire une localisation d'une balise d'altitude non nécessairement nulle. Les principes fondamentaux de la localisation restent toutefois identiques.

**Revendications**

1. Procédé de localisation (METH) d'une balise (X) au moyen d'un premier, deuxième et troisième émetteur-récepteur (A, B, C) de positions connues, la balise (X), le premier, le deuxième et le troisième émetteur-récepteur (A, B, C) comportant chacun un oscillateur local oscillant théoriquement à une même fréquence de référence ($f_{ref}$) mais oscillant en pratique à des fréquences de référence différentes ($f_{retA}$, $f_{retB}$, $f_{refC}$) à cause de dérives en fréquence, le procédé comportant les étapes suivantes :

   - une émission (Etp_Em_FskA), par un premier émetteur-récepteur (A), d'un signal, dit signal d'initiation (FskA), ledit signal d'initiation (FskA) étant reçu par des deuxième et troisième émetteurs-récepteurs (B, C),
   - un calcul, au moyen du signal d'initiation (FskA), d'erreurs ($e_{AB}$, $e_{AC}$) entre la fréquence de référence ($f_{ref}$) du premier émetteur-récepteur (A) et les fréquences de référence ($f_{ref}$) des deuxième et troisième émetteurs-récepteurs (B, C),
   - une émission (Et_Em_BpskX) par la balise (X) d'un premier signal impulsionnel (BpskX), ledit premier signal impulsionnel (BpskX) étant reçu par les premier, deuxième et troisième émetteurs-récepteurs (A, B, C),
   - une émission (Etp_Em_BpskA), par le premier émetteur-récepteur (A), d'un deuxième signal impulsionnel (BpskA), ledit deuxième signal impulsionnel (BpskA) étant reçu par les deuxième et troisième émetteurs-récepteurs (B, C),
   - un calcul (Etp_Cal_Δt) d'au moins trois écarts ($\Delta t_1$, $\Delta t_2$, $\Delta t_3$) entre des temps de vol des premier et deuxième signaux impulsionnels (BpskX, BpskA) au moyen des erreurs ($e_{AB}$, $e_{AC}$) de fréquence de référence, chaque écart de temps de vol ($\Delta t_1$, $\Delta t_2$, $\Delta t_3$) étant calculé dans la base de temps fournie par le premier émetteur-récepteur (A), et
   - un calcul (Etp_Cal_PosX) d'une position de la balise (X) au moyen des écarts de temps de vol ($\Delta t_1$, $\Delta t_2$, $\Delta t_3$).

2. Procédé de localisation (METH) selon la revendication 1, comprenant en outre des étapes d'autocorrélations (Etp_Aut_$P_{XA}$, Etp_Aut_$P_{XB}$, Etp_Aut_Pxc, Etp_Aut_$P_{AB}$, Etp_Aut_$P_{AC}$) des premier et deuxième signaux impulsionnels (BpskX, BpskA) reçus par les émetteurs-récepteurs (A, B, C), les autocorrélations permettant la détection et la sélection de pics d'autocorrélation ($P_{XA}$, $P_{XB}$, $P_{XC}$, $P_{AB}$, $P_{AC}$), les écarts de temps de vol ($\Delta t_1$, $\Delta t_2$, $\Delta t_3$) étant calculés au moyen desdits pics d'autocorrélation ($P_{XA}$, $P_{XB}$, $P_{XC}$, $P_{AB}$, $P_{AC}$).

3. Procédé de localisation (METH) selon la revendication 2, chaque étape d'autocorrélation (Etp_Aut_$P_{XA}$, Etp_Aut_$P_{XB}$, Etp_Aut_Pxc, Etp_Aut_$P_{AB}$, Etp_Aut_$P_{AC}$) comprenant la sélection du premier pic ($P_{XA}$, $P_{XB}$, Pxc, $P_{AB}$, $P_{AC}$) détecté sur une échelle temporelle, parmi une pluralité de pics d'autocorrélation détectables.

4. Procédé de localisation (METH) selon l'une des revendications 2 et 3, chaque étape d'autocorrélation (Etp_Aut_$P_{XA}$, Etp_Aut_$P_{XB}$, Etp_Aut_Pxc, Etp_Aut_$P_{AB}$, Etp_Aut_$P_{AC}$) d'un signal impulsionnel (BpskX, BpskA) comprenant les sous-étapes suivantes :

   - un calcul (Etp_Aut_$P_{XA}$_FFT) d'un spectre fréquentiel (SpecX) du signal impulsionnel (BpskX, BpskA),
   - une multiplication (Etp_Aut_$P_{XA}$_Mult) dudit spectre fréquentiel (SpecX) avec un deuxième spectre fréquentiel d'un signal à une fréquence $f_0 + \delta f_{Sel}$, où $f_0$ est la fréquence du signal impulsionnel (BpskX, BpskA), et $\delta f_{Sel}$ est l'erreur de fréquence de référence entre le dispositif (X, A) ayant émis le signal impulsionnel (BpskX, BpskA) et l'émetteur-récepteur (A, B, C) ayant reçu ledit signal impulsionnel (BpskX, BpskA), ledit deuxième spectre fréquentiel étant appelé prototype sélectionné ($Proto_{Sel}$), et
   - une transposition (Etp_Aut_$P_{XA}$_Trans) dans le domaine temporel du résultat de la multiplication, dite séquence produit ($Seq_{Prod}$).

5. Procédé de localisation (METH) selon la revendication 4, chaque étape d'autocorrélation (Etp_Aut_$P_{XA}$, Etp_Aut_$P_{XB}$, Etp_Aut_Pxc, Etp_Aut_$P_{AB}$, Etp_Aut_$P_{AC}$) d'un signal impulsionnel (BpskX, BpskA) comprenant une sous-étape d'interpolation (Etp_Aut_$P_{XA}$_AjM) de la séquence produit ($Seq_{Prod}$).

6. Procédé de localisation (METH) selon l'une des revendications 4 et 5, chaque étape d'autocorrélation (Etp_Aut_$P_{XA}$, Etp_Aut_$P_{XB}$, Etp_Aut_Pxc, Etp_Aut_$P_{AB}$, Etp_Aut_$P_{AC}$) comprenant une sous-étape de sélection (Etp_Aut_$P_{XA}$_Sel) du prototype sélectionné ($Proto_{Sel}$), comprenant les sous-étapes suivantes :

   - des multiplications (Etp_Aut_$P_{XA}$_Sel_Mult) du spectre fréquentiel (SpecX) à chaque prototype ($Proto_i$) parmi R prototypes ($Proto_i$)$_{i=1...R}$, R étant un nombre entier supérieur à 2, un prototype ($Proto_i$) étant un spectre fréquentiel d'un signal à une fréquence $f_0 + \delta f_i$, où $f_0$ est la fréquence du signal impulsionnel (BpskX, BpskA) et $\delta f_i$ est inférieur à 1 kHz, les multiplications générant R signaux produits ($Sgp_i$)$_{i=1...R}$,

- une transposition (Etp_Aut_P$_{XA}$_Sel_Trans) dans le domaine temporel de chaque signal produit (Sgp$_i$)$_{i=1...R}$, et
- une comparaison (Etp_Aut_P$_{XA}$_Sel_Comp) des amplitudes des maxima (Pc$_i$)$_{i=1...R}$ des signaux produit (Sgp$_i$)$_{i=1...R}$, le prototype présentant le maximum (Pc$_{Sel}$) le plus grand étant le prototype sélectionné (Proto$_{Sel}$).

**7.** Procédé de localisation (METH) selon l'une des revendications précédentes, comportant les étapes suivantes, réalisées suite à la réception du signal d'initiation (FskA) par la balise (X) :

- une émission (Etp_Em_FskX), par la balise (X), d'un signal, dit signal d'activation (FskX), comprenant une requête d'activation (RqAct) de modules de réception (RcA_Bpsk, RcB_Bpsk RcC_Bpsk) des trois émetteurs-récepteurs (A, B, C), lesdits modules étant adaptés à l'acquisition des premier et deuxième signaux impulsionnels (BpskX, BpskA), et
- un calcul, au moyen dudit signal d'activation (FskX), d'erreurs (e$_{XA}$, e$_{XB}$, exc) entre la fréquence de référence (f$_{refX}$) de la balise (X) et les fréquences de référence (f$_{refA}$, f$_{refB}$, f$_{rerC}$) des trois émetteurs-récepteurs (A, B, C).

**8.** Procédé de localisation (METH) selon la revendication 7, chaque étape de calcul d'une erreur (eAB, eAc, exA, e$_{XB}$, exc) de fréquence de référence entre un dispositif ayant émis (X, A) le signal d'initiation (FskA) ou le signal d'activation (FskX) et un émetteur-récepteur (A, B, C) ayant reçu ledit signal (FskA, FskX) comprenant :

- une analyse (Etp_Cal_$\Delta$e$_{AB}$_An) d'une évolution temporelle d'un spectre fréquentiel de signaux reçus par l'émetteur-récepteur (A, B, C), pour repérer une raie caractéristique du signal d'initiation (FskA),
- un calcul (Etp_Cal_$\Delta$e$_{AB}$_Ec), dans la base de temps fournie par l'oscillateur local de l'émetteur-récepteur (A, B, C), d'une plage d'écart ($\Delta$e$_{AB}$, $\Delta$e$_{AB}$, $\Delta$e$_{XA}$, $\Delta$e$_{XB}$, $\Delta$e$_{XB}$) entre une fréquence (f$_0$) de modulation du signal d'initiation (FskA), et la fréquence de ladite raie, et
- un calcul de l'erreur (eAB, e$_{AC}$, exA, e$_{XB}$, exc) au moyen des plages d'erreur ($\Delta$e$_{AB}$, $\Delta$e$_{AB}$, $\Delta$e$_{XA}$, $\Delta$e$_{XB}$, $\Delta$e$_{XB}$).

**9.** Procédé de localisation (METH) selon l'une des revendications 6 et 8, les R prototypes (Proto$_i$)$_{i=1...R}$ étant tels que pour tout i compris entre 1 et R, $\delta f_i = i/R \cdot \Delta e$, où $\Delta e$ est la plage d'erreur de fréquence de référence entre le dispositif (X, A) ayant émis le signal impulsionnel (BpskX, BpskA) et l'émetteur-récepteur (A, B, C) ayant reçu ledit signal impulsionnel (BpskX, BpskA).

**Patentansprüche**

**1.** Verfahren zur Lokalisierung (METH) einer Bake (X) mit Hilfe eines ersten, eines zweiten und eines dritten Senders/Empfängers (A, B, C) mit bekannten Positionen, wobei die Bake (X) sowie der erste, der zweite und der dritte Sender/Empfänger (A, B, C) jeweils einen lokalen Oszillator umfassen, der theoretisch mit der gleichen Referenzfrequenz (f$_{ref}$) schwingt, aber in der Praxis aufgrund von Frequenzabweichungen mit unterschiedlichen Referenzfrequenzen (f$_{refA}$, f$_{refB}$, frefc) schwingt, wobei das Verfahren die folgenden Schritte umfasst:

- eine Übertragung (Etp_Em_FskA) eines als Auslösesignal (FskA) bezeichneten Signals durch einen ersten Sender/Empfänger (A), wobei das Auslösesignal (FskA) von einem zweiten und einem dritten Sender/Empfänger (B, C) empfangen wird,
- eine Berechnung von Fehlern (e$_{AB}$, e$_{AC}$) zwischen der Referenzfrequenz (f$_{ref}$) des ersten Senders/Empfängers (A) und den Referenzfrequenzen (f$_{ref}$) des zweiten und des dritten Senders/Empfängers (B, C) mit Hilfe des Auslösesignals (FskA),
- eine Übertragung (Et_Em_BpskX) eines ersten Impulssignals (BpskX) durch die Bake (X), wobei das erste Impulssignal (BpskX) von dem ersten, dem zweiten und dem dritten Sender/Empfänger (A, B, C) empfangen wird,
- eine Übertragung (Etp_Em_BpskA) eines zweiten Impulssignals (BpskA) durch den ersten Sender/Empfänger (A), wobei das zweite Impulssignal (BpskA) durch den zweiten und den dritten Sender/Empfänger (B, C) empfangen wird,
- eine Berechnung (Etp_Cal_$\Delta$t) von mindestens drei Abweichungen ($\Delta$t$_1$, $\Delta$t$_2$, $\Delta$t$_3$) zwischen den Laufzeiten des ersten und des zweiten Impulssignals (BpskX, BpskA) mit Hilfe der Referenzfrequenzfehler (e$_{AB}$, e$_{AC}$), wobei jede Laufzeitabweichung ($\Delta$t$_1$, $\Delta$t$_2$, $\Delta$t$_3$) in der durch den ersten Sender/Empfänger (A) gelieferten Zeitbasis berechnet wird, und
- eine Berechnung (Etp_Cal_PosX) einer Position der Bake (X) anhand der Laufzeitabweichungen ($\Delta$t$_1$, $\Delta$t$_2$, $\Delta$t$_3$).

**2.** Verfahren zur Lokalisierung (METH) nach Anspruch 1, ferner umfassend Autokorrelationsschritte (Etp_Aut_P$_{XA}$, Etp_Aut_P$_{XB}$, Etp_Aut_Pxc, Etp_Aut_P$_{AB}$, Etp_Aut_P$_{AC}$) des ersten und zweiten Impulssignals (BpskX, BpskA), die von den Sender/Empfängern (A, B, C) empfangen werden, wobei die Autokorrelationen die Erfassung und die Auswahl von Autokorrelations-Peaks ($P_{XA}$, $P_{XB}$, Pxc, PAB, $P_{AC}$) ermöglichen, und die Laufzeitabweichungen ($\Delta t_1$, $\Delta t_2$, $\Delta t_3$) mittels der Autokorrelations-Peaks ($P_{XA}$, $P_{XB}$, $P_{XC}$, $P_{AB}$, $P_{AC}$) berechnet werden.

3. Verfahren zur Lokalisierung (METH) nach Anspruch 2, wobei jeder Autokorrelationsschritt (Etp_Aut_$P_{XA}$, Etp_Aut_$P_{XB}$, Etp_Aut_Pxc, Etp_Aut_$P_{AB}$, Etp_Aut_$P_{AC}$) das Auswählen des ersten auf einer Zeitskala erfassten Peaks ($P_{XA}$, $P_{XB}$, $P_{XC}$, $P_{AB}$, $P_{AC}$) aus mehreren erfassbaren Autokorrelations-Peaks umfasst.

4. Verfahren zur Lokalisierung (METH) nach einem der Ansprüche 2 und 3, wobei jeder Autokorrelationsschritt (Etp_Aut_$P_{XA}$, Etp_Aut_$P_{XB}$, Etp_Aut_Pxc, Etp_Aut_$P_{AB}$, Etp_Aut_$P_{AC}$) eines Impulssignals (BpskX, BpskA) die folgenden Teilschritte umfasst:

- eine Berechnung (Etp_Aut_$P_{XA}$_FFT) eines Frequenzspektrums (SpecX) des Impulssignals (BpskX, BpskA),
- eine Multiplikation (Etp_Aut_$P_{XA}$_Mult) des Frequenzspektrums (SpecX) mit einem zweiten Frequenzspektrum eines Signals bei einer Frequenz $f_0 + \delta f_{Sel}$, wobei $f_0$ die Frequenz des Impulssignals (BpskX, BpskA) ist und $\delta f_{Sel}$ der Referenzfrequenzfehler ist zwischen der Vorrichtung (X, A), die das Impulssignal (BpskX, BpskA) gesendet hat, und dem Sender/Empfänger (A, B, C), der das Impulssignal (BpskX, BpskA) empfangen hat, wobei das zweite Frequenzspektrum als ausgewählter Prototyp (Proto$_{Sel}$) bezeichnet wird, und
- eine Transposition (Etp_Aut_$P_{XA}$_Trans) im Zeitbereich des Multiplikationsergebnisses, genannt Produktsequenz (Seq$_{Prod}$).

5. Verfahren zur Lokalisierung (METH) nach Anspruch 4, wobei jeder Autokorrelationsschritt (Etp_Aut_$P_{XA}$, Etp_Aut_$P_{XB}$, Etp_Aut_Pxc, Etp_Aut_$P_{AB}$, Etp_Aut_$P_{AC}$) eines Impulssignals (BpskX, BpskA) einen Interpolationsteilschritt (Etp_Aut_$P_{XA}$_AjM) der Produktsequenz (Seq$_{Prod}$) umfasst.

6. Verfahren zur Lokalisierung (METH) nach einem der Ansprüche 4 und 5, wobei jeder Autokorrelationsschritt (Etp_Aut_$P_{XA}$, Etp_Aut_$P_{XB}$, Etp_Aut_Pxc, Etp_Aut_$P_{AB}$, Etp_Aut_$P_{AC}$) einen Teilschritt zur Auswahl (Etp_Aut_$P_{XA}$_Sel) des ausgewählten Prototyps (Proto$_{Sel}$) umfasst, der die folgenden Teilschritte umfasst:

- Multiplikationen (Etp_Aut_$P_{XA}$_Sel_Mult) des Frequenzspektrums (SpecX) bei jedem Prototyp (Proto$_i$) unter R Prototypen (Proto$_i$)$_{i=1...R}$, wobei R eine ganze Zahl größer 2 ist, wobei ein

Prototyp (Proto$_i$) ein Frequenzspektrum eines Signals mit einer Frequenz $f_0 + \delta f_i$ ist, wobei $f_0$ die Frequenz des Impulssignals (BpskX, BpskA) ist und $\delta f_i$ kleiner als 1 kHz ist, wobei die Multiplikationen R erzeugte Signale (Sgp$_i$)$_{i=1...R}$ ergeben,
- eine Transposition (Etp_Aut_$P_{XA}$_Sel_Trans) im Zeitbereich jedes erzeugten Signals (Sgp$_i$)$_{i=1...R}$, und
- einen Vergleich (Etp_Aut_$P_{XA}$_Sel_Comp) der Amplituden der Maxima (Pc$_i$)$_{i=1...R}$ der erzeugten Signale (Sgp$_i$)$_{i=1...R}$, wobei der Prototyp mit dem größten Maximum (Pc$_{Sel}$) der ausgewählte Prototyp (Proto$_{Sel}$) ist.

7. Verfahren zur Lokalisierung (METH) nach einem der vorstehenden Ansprüche, umfassend die folgenden Schritte, die nach dem Empfang des Auslösesignals (FskA) durch die Bake (X) durchgeführt werden:

- eine Übertragung (Etp_Em_FskX) eines als Aktivierungssignal (FskX) bezeichneten Signals durch die Bake (X), umfassend eine Anforderung zur Aktivierung (RqAct) von Empfangsmodulen (RcA_Bpsk, RcB_Bpsk, RcC_Bpsk) der drei Sender/Empfänger (A, B, C), wobei die Module für die Erfassung des ersten und des zweiten Impulssignals (BpskX, BpskA) geeignet sind, und
- eine Berechnung von Fehlern ($e_{XA}$, $e_{XB}$, exc) zwischen der Referenzfrequenz ($f_{refX}$) der Bake (X) und den Referenzfrequenzen ($f_{refA}$, $f_{refB}$, $f_{refC}$) der drei Sender/Empfänger (A, B, C) mit Hilfe des Aktivierungssignals (FskX).

8. Verfahren zur Lokalisierung (METH) nach Anspruch 7, wobei jeder Schritt zur Berechnung eines Referenzfrequenzfehlers (eAB, eAc, exA, exB, exc) zwischen einer Vorrichtung, die das Auslösesignal (FskA) oder das Aktivierungssignal (FskX) gesendet hat (X, A), und einem Sender/Empfänger (A, B, C), der dieses Signal (FskA, FskX) empfangen hat, umfasst:

- eine Analyse (Etp_Cal_$\Delta e_{AB}$_An) einer zeitlichen Entwicklung eines Frequenzspektrums von Signalen, die von dem Sender/Empfänger (A, B, C) empfangen werden, um eine charakteristische Bandbreite des Auslösesignals (FskA) zu identifizieren,
- eine Berechnung (Etp_Cal_$\Delta e_{AB}$_Ec) eines Abweichungsbereichs ($\Delta e_{AB}$, $\Delta e_{AB}$, $\Delta e_{XA}$, $\Delta e_{XB}$, $\Delta e_{XB}$) zwischen einer Modulationsfrequenz ($f_0$) des Auslösesignals (FskA) und der Frequenz der genannten Bandbreite in der durch den lokalen Oszillator des Senders/Empfängers (A, B, C) gelieferten Zeitbasis, und
- eine Fehlerberechnung (eAB, eAc, exA, exB, exc) unter Verwendung der Fehlerbereiche

$(\Delta e_{AB}, \Delta e_{AB}, \Delta e_{XA}, \Delta e_{XB}, \Delta e_{XB})$.

9. Verfahren zur Lokalisierung (METH) nach einem der Ansprüche 6 und 8, wobei die R Prototypen (Proto$_i$)$_{i=1...R}$ derart beschaffen sind, dass für jedes i zwischen 1 und R $\delta f_i = i/R \cdot \Delta e$, wobei $\Delta e$ der Referenzfrequenzfehlerbereich ist zwischen der Vorrichtung (X, A), die das Impulssignal (BpskX, BpskA) gesendet hat, und dem Sender/Empfänger (A, B, C), der das Impulssignal (BpskX, BpskA) empfangen hat.

**Claims**

1. Method (METH) for localizing a beacon (X) by means of a first, second a third transceivers (A, B, C), each of the beacon (X), the first, the second and the third transceivers (A, B, C) comprising a local oscillator theoretically oscillating at a same reference frequency ($f_{ref}$) but in practice oscillating at different reference frequencies ($f_{refA}$, $f_{refB}$, $f_{refC}$) due to frequency drifts, the method (METH) comprising the following steps:

   - transmission (Etp_Em_FskA), by a first transceiver (A), of a signal, called the initiation signal (FskA), said initiation signal (FskA) being received by second and third transceivers (B, C),
   - calculation, by means of the initiation signal (FskA), of errors ($e_{AB}$, $e_{AC}$) between the reference frequency ($f_{refA}$) of the first transceiver (A) and the reference frequencies ($f_{refB}$, $f_{refC}$) of the second and third transceivers (B, C),
   - transmission (Et_Em_BpskX), by the beacon (X), of a first pulsed signal (BpskX), said first pulsed signal (BpskX) being received by the first, second and third transceivers (A, B, C),
   - transmission (Etp_Em_BpskA), by the first transceiver (A), of a second pulsed signal (BpskA), said second pulsed signal (BpskA) being received by the second and third transceivers (B, C),
   - calculation (Etp_Cal_$\Delta$t), by means of frequency reference errors ($e_{AB}$, $e_{AC}$), of at least three differences ($\Delta t_1$, $\Delta t_2$, $\Delta t_3$) between the times-of-flight of the first and second pulsed signals (BpskX, BpskA), each time-of-flight difference ($\Delta t_1$, $\Delta t_2$, $\Delta t_3$) being calculated in the base time of the first transceiver (A), and
   - calculation (Etp_Cal_PosX) of a position of a beacon (X) by means of the time-of-flight differences ($\Delta t_1$, $\Delta t_2$, $\Delta t_3$).

2. Localization method (METH) according to claim 1, further comprising autocorrelation steps, (Etp_Aut_P$_{XA}$, Etp_Aut_P$_{XB}$, Etp_Aut_Pxc, Etp_Aut_P$_{AB}$, Etp_Aut_P$_{AC}$) of the first and second pulsed signals (BpskX, BpskA) received by the transceivers (A, B, C), the autocorrelations allowing the detection and selection of autocorrelation peaks (P$_{XA}$, P$_{XB}$, P$_{XC}$, P$_{AB}$, P$_{AC}$), the time-of-flight differences ($\Delta t_1$, $\Delta t_2$, $\Delta t_3$) being calculated by means of said autocorrelation peaks (P$_{XA}$, P$_{XB}$, P$_{XC}$, P$_{AB}$, P$_{AC}$).

3. Localization method (METH) according to claim 2, each autocorrelation step (Etp_Aut_P$_{XA}$, Etp_Aut_P$_{XB}$, Etp_Aut_Pxc, Etp_Aut_P$_{AB}$, Etp_Aut_P$_{AC}$) including the selection of the first peak (P$_{XA}$, P$_{XB}$, P$_{XC}$, P$_{AB}$, P$_{AC}$) detected on a time scale, from among a plurality of detectable autocorrelation peaks.

4. Localization method (METH) according to any of claims 2 and 3, each autocorrelation step (Etp_Aut_P$_{XA}$, Etp_Aut_P$_{XB}$, Etp_Aut_Pxc, Etp_Aut_P$_{AB}$, Etp_Aut_P$_{AC}$) of a pulsed signal (BpskX, BpskA) including the following sub-steps:

   - calculation (Etp_Aut_P$_{XA}$_FFT) of a frequency spectrum (SpecX) of the pulsed signal (BpskX, BpskA),
   - multiplication (Etp_Aut_P$_{XA}$_Mult) of said frequency spectrum (SpecX) with a second frequency spectrum at a frequency $f_0 + \delta f_{Sel}$, where $f_0$ is the frequency of the pulsed signal (BpskX, BpskA), and $\delta f_{Sel}$ is the reference frequency error between the device (X, A) having transmitted the pulsed signal (BpskX, BpskA) and the transceiver (A, B, C) having received said pulsed signal (BpskX, BpskA), said second frequency spectrum being called the selected prototype (Proto$_{Sel}$), and
   - transposition (Etp_Aut_P$_{XA}$_Trans) in the time domain of the result of the multiplication, called the product sequence (Seq$_{Prod}$).

5. Localization method (METH) according to claim 4, each autocorrelation step (Etp_Aut_P$_{XA}$, Etp_Aut_P$_{XB}$, Etp_Aut_Pxc, Etp_Aut_P$_{AB}$, Etp_Aut_P$_{AC}$) of a pulsed signal (BpskX, BpskA) including a sub-step of interpolation (Etp_Aut_P$_{XA}$_AjM) of the product sequence (Seq$_{Prod}$).

6. Localization method (METH) according to any of claims 4 and 5, each autocorrelation step (Etp_Aut_P$_{XA}$, Etp_Aut_P$_{XB}$, Etp_Aut_Pxc, Etp_Aut_P$_{AB}$, Etp_Aut_P$_{AC}$) including a sub-step of selection (Etp_Aut_P$_{XA}$_Sel) of a selected prototype (Proto$_{Sel}$) including the following sub-steps:

   - multiplications (Etp_Aut_P$_{XA}$_Sel_Mult) of the frequency spectrum (SpecX) by each prototype (Proto$_i$) from among R prototypes (Proto$_i$)$_{i=1...R}$, R being an integer number greater than 2, a pro-

totype (Proto$_i$) being a frequency spectrum of a signal at a frequency $f_0+\delta f_i$, where $f_0$ is the frequency of the pulsed signal (BpskX, BpskA) and $\delta f_i$ is less than 1 kHz, the multiplications generating R product signals (Sgp$_i$)$_{i=1...R}$,

- transposition (Etp_Aut_P$_{XA}$_Sel_Trans) in the time domain of each product signal (Sgp$_i$)$_{i=1...R}$, and

- comparison (Etp_Aut_P$_{XA}$_Sel_Comp) of the amplitude of the maxima (Pc$_i$)$_{i=1...R}$ of the product signals (Sgp$_i$)$_{i=1...R}$, the prototype presenting the greatest maximum (Pc$_{Sel}$) being the selected prototype (Proto$_{Sel}$).

7. Localization method (METH) according to any of the preceding claims, including the following steps, performed on the reception of initiation signal(FskA) by the beacon (X):

- transmission (Etp_Em_FskX), by the beacon (X), of a signal, called the activation signal (FskX), including a request for activation (RqAct) of the receiver modules (RcA_Bpsk, RcB_Bpsk RcC_Bpsk) of the three transceivers (A, B, C), said modules being adapted for acquisition of first and second pulsed signals (BpskX, BpskA), and

- calculation, by means of said initiation signal (FskA), of errors (e$_{XA}$, e$_{XB}$, exc) between the reference frequency (f$_{refX}$) of the beacon (X) and the reference frequencies (f$_{refA}$, f$_{refB}$, f$_{refC}$) of the three transceivers (A, B, C).

8. Localization method (METH) according to claim 7, each step of calculating a reference frequency error (eAB, eAc, exA, exB, exc) between a device having transmitted (X, A) the initiation signal (FskA) or the activation signal (FskX) and a transceiver (A, B, C) having receiving said signal (FskA, FskX) including:

- analysis (Etp_Cal_Ae$_{AB}$_An) of the temporal evolution of a frequency spectrum of signals received by the transceiver (A, B, C), to identify a characteristic line of the initiation signal (FskA),

- calculation (Etp_Cal_$\Delta e_{AB}$_Ec), in the time base provided by the local oscillator of the transceiver (A, B, C), of a range of error ($\Delta e_{AB}$, $\Delta e_{AB}$, $\Delta e_{XA}$, $\Delta e_{XB}$, $\Delta e_{XB}$) between a modulation frequency ($f_0$) of the initiation signal (FskA), and the frequency of said line, and

- calculation of the error (eAB, eAc, exA, exB, exc) by means of ranges of error ($\Delta e_{AB}$, $\Delta e_{AB}$, $\Delta e_{XA}$, $\Delta e_{XB}$, $\Delta e_{xB}$).

9. Localization method (METH) according to any of claims 6 and 8, the R prototypes (Proto$_i$)$_{i=1...R}$ being such that for any i comprised between 1 and R, $\delta f_i=i/R\cdot\Delta e$, where $\Delta e$ is the reference frequency error range, the device (X, A) having transmitted the pulsed signal (BpskX, BpskA) and the transceiver (A, B, C) having received said pulsed signal (BpskX, BpskA).

## Fig. 1

A

| RcA_Fsk |
|---|
| EmA_Fsk |
| RcA_Bpsk |
| EmA_Bpsk |

B

| RcB_Fsk |
|---|
| EmB_Fsk |
| RcB_Bpsk |

X

| RcX_Fsk |
|---|
| EmX_Fsk |
| EmX_Bpsk |

C

| RcC_Fsk |
|---|
| EmC_Fsk |
| RcC_Bpsk |

## Fig. 2

Fig. 3

METH

Etp_Em_FskA

Etp_Cal_$\Delta$e$_{AB}$

Etp_Cal_$\Delta$e$_{AB}$_An

Etp_Cal_$\Delta$e$_{AB}$_Ec

Etp_Cal_$\Delta$e$_{AC}$

Etp_Em_FskX

Etp_Act_$\Delta$e$_{XA}$

Etp_Act_$\Delta$e$_{XB}$

Etp_Act_$\Delta$e$_{XC}$

Etp_Act_Bpsk

Etp_Em_BpskX

Etp_Aut_P$_{XA}$

Etp_Aut_P$_{XB}$

Etp_Aut_P$_{XC}$

Etp_Em_BpskA

Etp_Aut_P$_{AB}$

Etp_Aut_P$_{AC}$

Etp_Cal_$\tau_A$

Etp_Cal_$\tau_B$

Etp_Cal_$\tau_C$

Etp_Cal_$\tau_{B'}$

Etp_Cal_$\tau_{C'}$

Etp_Cal_$\Delta$t

Etp_Tr_$\tau_{B'}$

Etp_Tr_$\tau_{C'}$

Etp_Cal_PosX

Etp_Filt_PosX

Etp_T$_R$_PosX

## Fig. 4

Etp_Em_FskA

A

X          FskA

B          C

## Fig. 5

Etp_Em_FskX
Etp_Em_BpskX

A

FskX, BpskX

X

B          C

## Fig. 6

Etp_Em_FskX          Etp_Em_BpskX

X    {          FskX          BpskX

Etp_Em_BpskA

A    {          FskX          BpskX          BpskA

Md_Det_Fsk    Md_Det_Bpsk

B    {          FskX          BpskX          BpskA

Md_Det_Fsk          Md_Det_Bpsk

C    {          FskX          BpskX          BpskA

Md_Det_Fsk          Md_Det_Bpsk

t

## Fig. 7

FskX

| RqAct | AdnX |
|---|---|
| 14ms | 16ms |

BpskX

1ms

0.5ms

## Fig. 9

$P_{XA}$

TA

A:

BpskA

t

$P_{XB}$

TB

AB/c0

$P_{AB}$

B:

t

$P_{XC}$

TC

AC/c0

$P_{AC}$

C:

t

## Fig. 10

Etp_Em_BpskA

A

X

BpskA

B

C

## Fig. 11

Etp_T$_R$_$\tau_{B'}$
Etp_T$_R$_$\tau_{C'}$

A

$\tau_{B'}$

X

$\tau_{C'}$

B

C

## Fig. 12

Etp_T$_R$_PosX

A

PosX

X

B

C

# Fig. 8

## RÉFÉRENCES CITÉES DANS LA DESCRIPTION

**Documents brevets cités dans la description**

- US 20010030625 A1
- US 20130214976 A1
- US 7295159 B1
- EP 2239860 B1